# EUROPEAN PATENT APPLICATION

(11) **EP 1 603 004 A2**
(43) Date of publication of application: **07.12.2005**
(21) Application number: 05007991.2
(22) Date of filing: 12.04.2005
(51) Int. Cl.: G06F 1/04

(54) **Authentication mechanism permitting access to data stored in a data processing device**

(30) Priority: 15.04.2004 US 562829 P; 03.02.2005 US 49905; 03.02.2005 US 49772; 03.02.2005 US 49798; 08.04.2005 US 102441; 22.03.2005 US; 08.04.2005 US; 22.03.2005 US; 03.02.2005 US 49768; 30.03.2005 US
(71) Applicant: Broadcom Corporation, Irvine, CA 92618-7013 (US)
(72) Inventor: Wilson, Christopher S., 94085 Sunnyvale CA (US)
(74) Representative: Jehle, Volker Armin

(57) **Abstract**

Herein described is a system and method of authenticating one or more users seeking access to data stored in a storage device. The system includes an authentication mechanism, a memory, one or more files stored in the memory, and one or more applications used to view, select, execute, and display the one or more files. The method utilizes a user identifier, one or more passwords provided by a user, and the authentication mechanism.

## Description

### CROSS-REFERENCE TO RELATED APPLICATIONS/INCORPORATION BY REFERENCE

This application makes reference to and claims priority from United States Provisional Patent Application Serial No. 60/562829, entitled "AUTHENTICATION MECHANISM PERMITTING ACCESS TO DATA STORED IN A DATA PROCESSING DEVICE", filed on April 15, 2004, the complete subject matter of which is incorporated herein by reference in its entirety.

This application makes reference to:
United States Application Serial No. 11/049905 (Attorney Docket No. 15673US02) filed February 3, 2005;
United States Application Serial No. ₋₋₋₋₋₋₋ (Attorney Docket No. 15675US03) filed March 22, 2005;
United States Application Serial No. ₋₋₋₋₋₋₋ (Attorney Docket No. 15679US02) filed April 8, 2005;
United States Application Serial No. ₋₋₋₋₋₋₋ (Attorney Docket No. 15681 US03) filed March 30, 2005;
United States Application Serial No. 11/049772 (Attorney Docket No. 15682US02) filed February 3, 2005;
United States Application Serial No. 11/049798 (Attorney Docket No. 15683US02) filed February 3, 2005;
United States Application Serial No. ₋₋₋₋₋₋₋ (Attorney Docket No. 15684US02) filed March 22, 2005; and
United States Application Serial No. 11/049768 (Attorney Docket No. 15685US02) filed February 3, 2005.
The above stated applications are hereby incorporated herein by reference in their entireties.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

A data storage device may contain sensitive or confidential data. Such sensitive data must only be provided to those who are authorized to use the data. In order to provide secured access to authorized users, an administrator of such a data storage device may issue one or more usernames and associated passwords. Unfortunately, in some instances, such sensitive data may be compromised if an unauthorized user gains access to the one or more usernames and passwords. A hacker who gains access to such sensitive data may alter the data or propagate the data to other unauthorized users and entities.

The limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the present invention provide at least a system and method that facilitates secure authentication of one or more users accessing data stored within a data storage device. The method and system provides a security mechanism that prevents unauthorized access to data stored in the storage device. The aforementioned aspects are substantially shown and described in connection with at least one of the following figures, as set forth more completely in the claims.
According to an aspect of the invention, a method of accessing data stored in a data storage device is provided comprising receiving an input provided by a user, said input used by an actuator that is operated by said user, said input facilitating said access to said data stored in said data storage device by said user.
Advantageously, said actuator comprises a switch.
Advantageously, said input short-circuits said switch.
Advantageously, operating said switch allows said access to said data for a period of time.
Advantageously, said period of time may be programmed by said user.
According to an aspect of the invention, a method of authenticating a user of a data storage device is provided comprising:
first receiving an input provided by said user that activates an actuation device;
second receiving a user identifier from said user; and
third receiving a password from said user.
Advantageously, said second receiving and said third receiving occurs within a period of time after said first receiving occurs.
Advantageously, said third receiving occurs within a period of time after said first receiving and/or said second receiving occurs.
Advantageously, said actuation device is enabled or disabled by way of making one or more selections by way of a user interface.
Advantageously, said actuation device comprises a switch located within said data storage device.
Advantageously, said actuation device comprises a switch that remains active or closed for a designated period of time.
Advantageously, said designated period of time may be programmed by said user.
Advantageously, said authenticating allows said user to access data stored in said data storage device.
According to an aspect of the invention, a system for providing authorized access to data stored in one or more data pools of one or more data storage drives of a data storage device is provided comprising:
a processor;
an actuation device used to receive an input provided by a user seeking said access to said data;
a memory in said data storage device;
one or more executable files stored in said memory of said data storage device;
a computing device communicatively coupled to said data storage device; and
an application resident in said computing device, said application capable of viewing said one or more files, said computing device used to identify and initiate execution of said one or more executable files using said application, said execution generating a user interface in which said actuation device may be enabled or disabled by said user.
Advantageously, said input actuates said actuation device for a period of time, allowing said access to said data by said user.
Advantageously, access to said data occurs if a user correctly inputs a username and a password after said actuation device is activated.
Advantageously, said actuation device comprises a switch.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 illustrates a block diagram of a typical system incorporating the use of a NAS in accordance with an embodiment of the invention.

Figure 2 is a block diagram of a network attached storage device (NAS) in accordance with an embodiment of the invention.

Figure 3 is a block diagram of a NAS chip (NASoC) in accordance with an embodiment of the invention.

Figure 4 is an operational flow diagram of the process in which a security/authentication mechanism that facilitates storage access authentication is enabled or disabled, in accordance with an embodiment of the invention.

Figure 5 illustrates a screen shot of Windows Explorer illustrating the directory contents of a NAS having an exemplary default name, Viresh-NAS; the screen shot is displayed after Viresh-NAS is selected from the Workgroup directory, in accordance with an embodiment of the invention.

Figure 6 illustrates a Windows Explorer screen shot of one or more configuration files residing in a configuration directory, in accordance with an embodiment of the invention.

Figure 7 illustrates a Netscape screen shot indicating that the configuration file is processing the command, in accordance with an embodiment of the invention.

Figure 8 illustrates a browser screen shot of an exemplary user interface that allows a user to input one or more administrative parameters, in accordance with an embodiment of the invention.

Figure 9 illustrates a block diagram of a NAS incorporating an actuator in accordance with an embodiment of the invention.

### DETAILED DESCRIPTION OF THE INVENTION

Aspects of the present invention provide a system and method that facilitates the secure authentication of one or more users who seek access to data stored within a data storage device. Aspects of the present invention provide a security or authentication mechanism that prevents unauthorized access to data stored in the storage device. The security and authentication mechanism may be enabled or disabled by way of using one or more user interfaces. The one or more user interfaces allow a user to configure or control user access to the data storage device. For example, the one or more user interfaces may be used to configure one or more users reading from or writing to the one or more data pools within the data storage device. The one or more user interfaces may be utilized for the control, manipulation, and/or configuration of the data storage device. One or more administrative functions or operations of the data storage device, including its setup and modification may be configured by the one or more user interfaces. The various aspects of the authentication mechanism are effective against unauthorized users attempting to access the data storage device using any one of a number of data processing devices. These data processing devices may comprise a computer workstation, PDA, laptop, or any other device capable of networking as a client to the storage device.

In a representative embodiment, the data storage device permits a user to initially access one or more configuration pages used for initializing one or more usernames and passwords. The configuration pages may be used to enable the security/authentication mechanism previously mentioned. By enabling the security/authentication mechanism, future access to data stored in the data storage device may be obtained by successfully activating or actuating the security/authentication mechanism. The security/authentication mechanism may be referred to as an actuator or actuation device. By enabling the security/authentication mechanism, future access to data stored in the data storage device may be limited to users who provide a valid username/password and activate the security/authentication mechanism. In a representative embodiment, the security/authentication mechanism or actuator may be active for a certain period of time after being activated, providing a window of time in which a user may access the data stored in the data storage device. Aspects of the present invention may prevent unauthorized entities, such as hackers, to access data using purely network based security attacks. The data storage device may be networked with one or more data processing devices, and as a consequence, may act as a centralized storage facility for the one or more data processing or computing devices that are communicatively coupled within a network. As a consequence, the data storage device may be referred to as a network attached storage device (NAS).

In a representative embodiment, the data storage device may comprise one or more data storage drives, such as hard disk drives, or any other type of media drive. The data storage device may comprise a combination of different types of data storage drives. A data storage drive may comprise any type of media capable of storing data. The media types may comprise magnetic, optical, flash memory, and the like.

Hereinafter, the term "hard disk drive" alternatively may refer to a data storage drive or any drive or component comprising a media used to store data. In a representative embodiment, one or more data storage drives or hard disk drives may be incorporated into a data storage device. The data storage device comprises one or more data storage drives or hard disk drives. In a representative embodiment, the data storage device facilitates the incorporation of the one or more additional data storage drives or hard disk drives.

In a representative embodiment, the security/authentication mechanism comprises an actuator, such as a depressible push-button switch, which must be physically depressed by a user wishing to gain access to the contents of the NAS. The contents may comprise one or more data files and/or file directories stored in one or more data pools of one or more data storage drives of the NAS. In a representative embodiment, a user may access the contents only within a certain period of time after the actuator is actuated. For example, the actuator (e.g., a depressible push-button switch) may allow a 1 minute duration after it is depressed, in which one or more data files or directories may be accessed by a user. Access to data stored in the one or more data pools of one or more data storage drives of the data storage device may be restricted, in this embodiment, unless a user physically depresses the push-button switch.

The actuator or security/authentication mechanism may be enabled by a user by way of providing one or more inputs into one or more configuration pages provided by the NAS, which may occur during the NAS' initial setup process. In a representative embodiment, the actuator is enabled by way of one or more selections provided by a pull-down field of a user interface. In a representative embodiment, enabling the authentication button mechanism allows a user to view the one or more configuration pages only when the actuator, push-button switch, or authentication button is depressed and a request to view the one or more configuration pages is made within a certain time period. A request may be initiated by selecting and "clicking" on one or more configuration files viewed by a user using a file organizing application, such as Microsoft Windows Explorer. The selections or selected configuration file(s) may be served from a NAS to the user's client workstation when the user executes the one or more configuration files (i.e., by selecting or "clicking"). The NAS may prevent the one or more configuration files from being displayed unless a request to view the one or more configuration files is made before the certain time period has elapsed. In other representative embodiments, the actuator or authentication mechanism may comprise a fingerprint reader, a card reader (e.g., a magnetic card reader), an RFID device, a codeword or key, card swipe, or any other authentication mechanism. Alternatively, as opposed to a user depressing a mechanical switch, the authentication mechanism may utilize communication to the NAS using any type of wireless or wireline protocol. The wireless communication may comprise using a secured form of communication. For example, the wireless communication protocol may comprise Bluetooth or IEEE 802.11x. The security/authentication mechanism provides a means to prevent unauthorized entry into a data storage device by hackers.

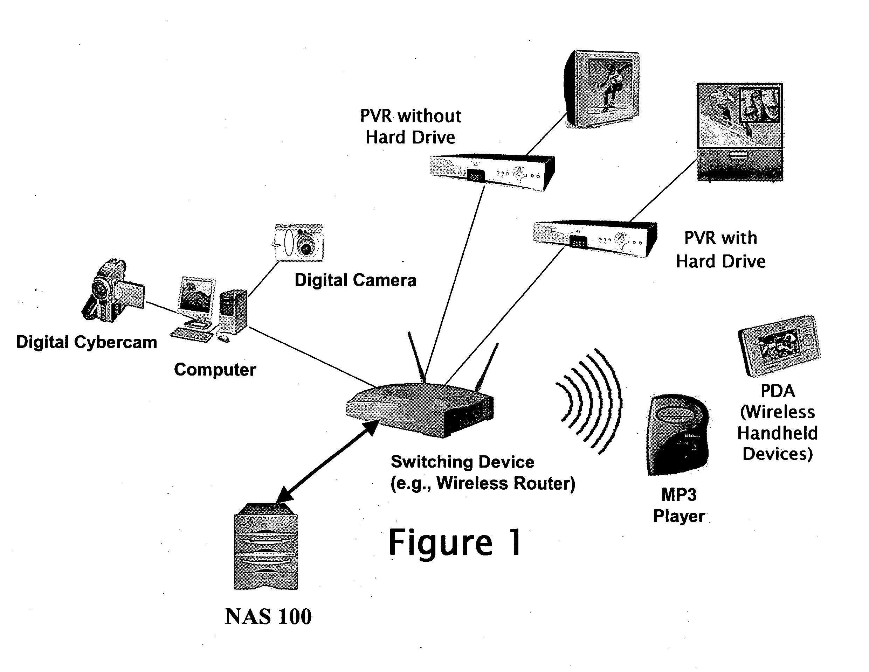

Figure 1 illustrates a block diagram of a typical system incorporating the use of a NAS 100 in accordance with an embodiment of the invention. The NAS 100 provides data storage for one or more data processing devices. As illustrated, an exemplary switching device provides connectivity of the NAS 100 to the one or more data processing devices. The switching device is capable of providing connectivity using wireless or wireline communications. For example, a wireless router may utilize any one of the following wireless or wireline data communications protocols: 10/100 Ethernet, gigabit Ethernet, 802.11 x, Bluetooth, and the like. The one or more data processing devices comprises devices such as a digital cybercam, digital camera, MP3 player, PDA, and one or more personal video recorders (PVRs). As illustrated, the PVR may be equipped with or without a hard disk drive. In one embodiment, the PVR may be referred to as a set-top-box (STB) that incorporates personal video recorder capabilities. In one embodiment, the PVR may be referred to as a PVR-STB. The PVRs illustrated, are connected to a television or a monitor capable of playing multimedia content to a home user. Use of the NAS 100 provides a centralized storage device for multimedia content received by the one or more PVRs. As a consequence of storing content in a NAS 100, PVRs lacking a storage facility, such as a hard disk drive, may store any data it receives into the NAS 100. Further, any data stored by other data processing devices, including PVRs, may be easily accessed and viewed by any of the one or more data processing devices. For example, a PVR without hard drive may access multimedia content originally stored into the NAS 100 by a PVR with a hard drive, and vice-versa. As a result, the NAS 100 facilitates sharing of data among the one or more data processing devices. Since it provides a remote storage mechanism, the NAS 100 may be considered a "virtual storage device" by the one or more data processing devices. The NAS 100 is configured such that its storage capacity may be easily expanded. In a representative embodiment, the NAS 100 may accept additional hard disk drives. For example, a NAS 100 may be capable of receiving one or more additional hard drives. As such, the NAS 100 provides an easily scalable and flexible storage mechanism that accommodates for future data storage growth. In addition, the NAS 100 is capable of providing data mirroring and data striping capabilities.

When the NAS 100 is first introduced to the exemplary switching device shown in Figure 1, one or more of its configuration parameters may be setup as part of an initialization process. In one embodiment, the parameters setup during the initialization process comprises the NAS' time, date, and time zone. The NAS, for example, may utilize the computer illustrated in Figure 1 as a reference source in setting up its time, date, and time zone. It is contemplated that the NAS may utilize any one of the other data processing devices (e.g., digital cybercam, digital camera, PVR without hard drive, PVR with hard drive, MP3 player, or PDA) shown in Figure 1 as a reference source in the setup process.

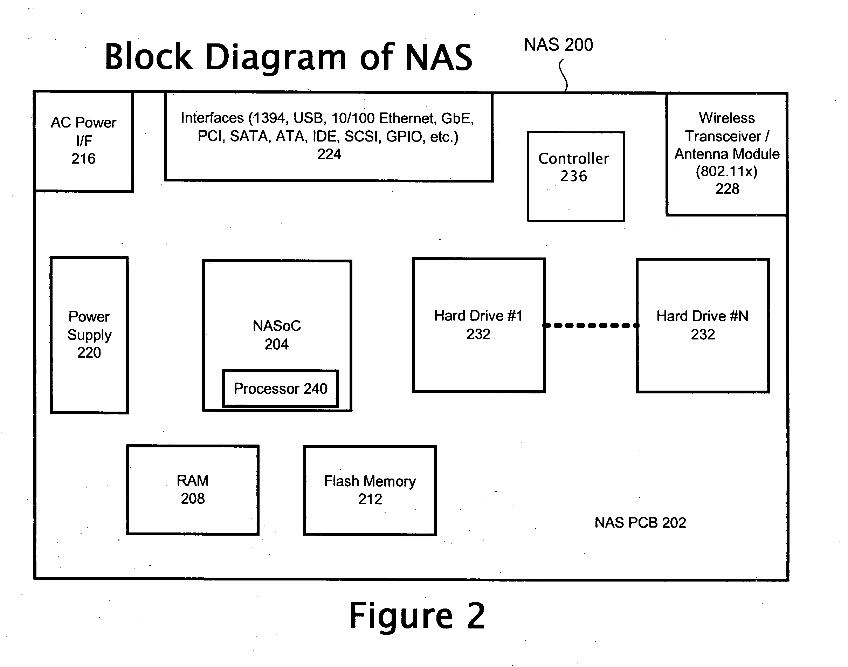

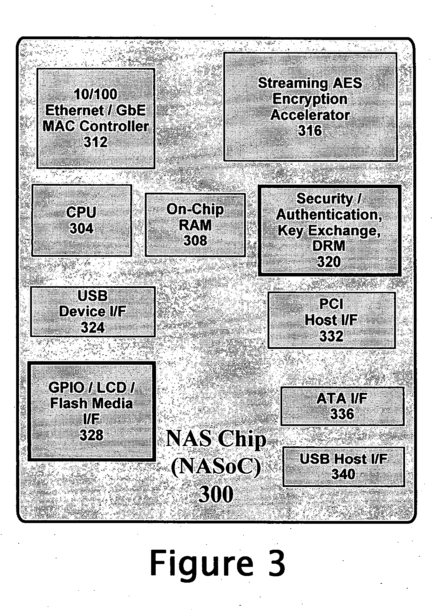

In one embodiment, the NAS setup process occurs after the NAS is physically connected to a network and recognized by an operating system such as a Microsoft Windows operating system. The following Figures 2 and 3 illustrate an embodiment of a NAS' system architecture.

Figure 2 is a block diagram of a network attached storage device (NAS) 200 in accordance with an embodiment of the invention. The NAS 200 comprises a printed circuit board (NAS PCB) 202 containing one or more components. The one or more components are electrically connected by way of the printed circuit board (PCB) 202. The one or more components comprises a NAS chip (NASoC) 204, a random access memory 208, a flash memory 212, an AC power interface 216, a power supply 220, a block of interfaces 224, a wireless transceiver / antenna module 228, one or more hard disk drives 232, and a controller 236. The interface block 224 may comprise one or more of the following interfaces: IEEE 1394, USB, 10/100 Ethernet, gigabit Ethernet, PCI, SATA, ATA, IDE, SCSI, GPIO, etc.. The wireless transceiver / antenna module 228 may comprise a attachable module or mini-PCI card that may be optionally connected or attached to the NAS' printed circuit board 202. The one or more hard disk drives 232 may comprise any number of hard drives depending on the design of the NAS 200. The printed circuit board 202 may be configured to accommodate an appropriate number of hard disk drives. The number of hard drives utilized may depend on the type of mirroring or data striping (i.e., RAID) provided by the NAS 200. In one embodiment, the controller 236 provides control for any one of several devices (such as hard disk drives) connected to the NASoC 204. The NASoC 204 may comprise an integrated circuit chip incorporating a processor or central processing unit (CPU) 240.

Figure 3 is a block diagram of a NAS chip (NASoC) 300 in accordance with an embodiment of the invention. The NASoC 300 is an integrated circuit mounted on the previously described NAS PCB. The NASoC 300 provides one or more functions that allow the NAS to properly operate. The NASoC 300 comprises a central processing unit (CPU) 304, an on-chip random access memory 308, an Ethernet / MAC controller 312, an encryption accelerator 316, a security / authentication, key exchange, DRM chip 320, and a number of interfaces 324, 328, 332, 336, 340. The interfaces 324, 328, 332, 336, 340 may comprise, for example, the following type of interfaces (I/F): USB device I/F 324, a PCI host I/F 332, a GPIO / LCD / flash media I/F 328, an ATA I/F 336, and a USB host I/F 340. The NAS chip 300 may communicate and/or connect to the one or more components described in reference to Figure 2.

Referring to Figure 2, the NAS may incorporate varying numbers of hard disk drives depending on its storage and RAID requirements. The NAS 200 chassis may be configured to incorporate 1, 2, 4, or more hard disk drives depending on type of use. For example, the NAS may utilize 4 hard disk drives for implementing RAID 0+1 (e.g., both data mirroring and data striping), suitable for use in a small office / business environment. On the other hand, the NAS may utilize only 1 or 2 hard disk drives in a home (or household) environment since the storage capacity utilized is typically less than that utilized in an office or business environment. Similarly, memory components utilized in the NAS may be varied depending on type of use. As the data storage requirements increase and as the frequency of data storage related requests increase, the performance of the NAS may be improved to meet its operational needs, by way of increasing memory size of the NAS. For example, flash or DRAM memory capacities may be increased in order to improve the processing performance of the NAS. Similarly, the chassis size, power circuitry, and other components may be adjusted to meet the processing requirements of its operational environment.

In a representative embodiment, the processor 240 within the NASoC (204 or 300) may execute software or firmware residing within the RAM 208 or flash memory 212. In one embodiment, execution of the software causes the http server to serve pages at a user's workstation (e.g., client workstation) facilitating the display of a desired user interface. In one embodiment, the software that is executed by the processor 240 comprises a configuration file that is accessed and recognized by an operating system, such as a Microsoft Windows operating system, such that it may be viewed and run by the exemplary Microsoft Windows Explorer application. In one embodiment, the configuration file is accessible before a user completes an initialization procedure on the NAS. The initialization process may involve creating one or more authentication passwords that are used in the future for accessing the configuration file. The Microsoft Windows operating system may comprise Windows XP, 2000, ME, 98, Pocket PC, or the like. When the configuration file is executed, by clicking on its filename as displayed by the Microsoft Windows Explorer application, a user interface is displayed to a user's data processing device. Thereafter, a user may provide one or more configuration parameters or inputs to initialize or configure the NAS. The inputs may comprise the following: a name for the NAS, an administration username, an administration password, one or more alternate authentication inputs, time, time zone, and network time server internet protocol addresses.

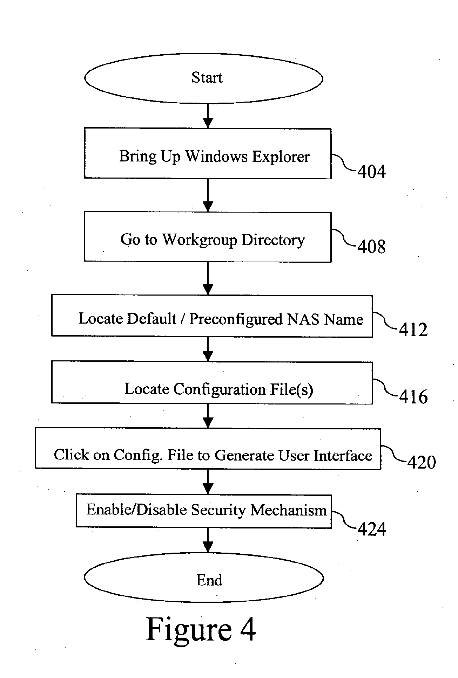

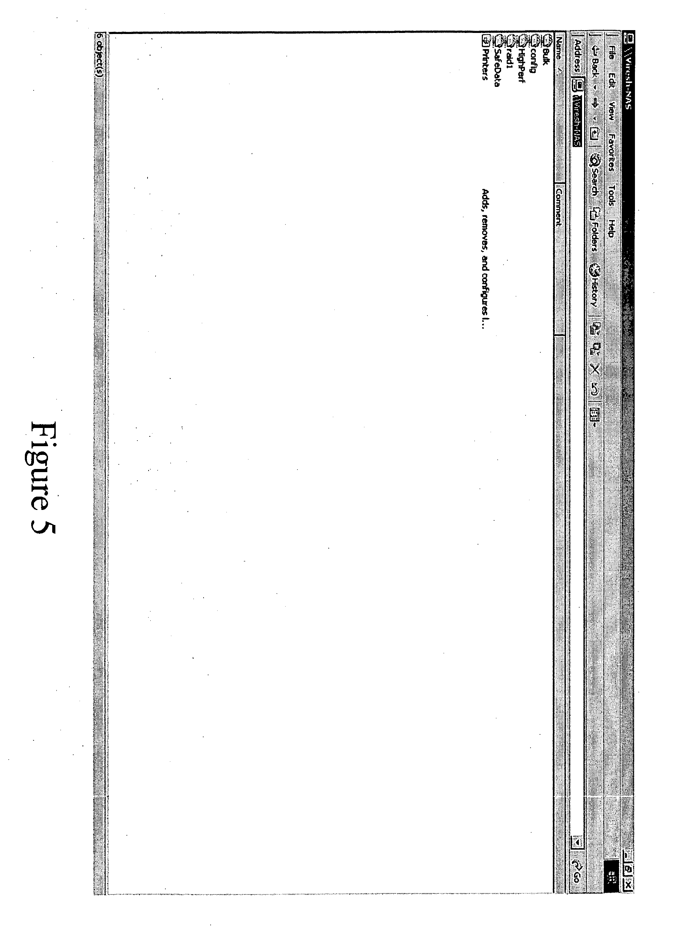

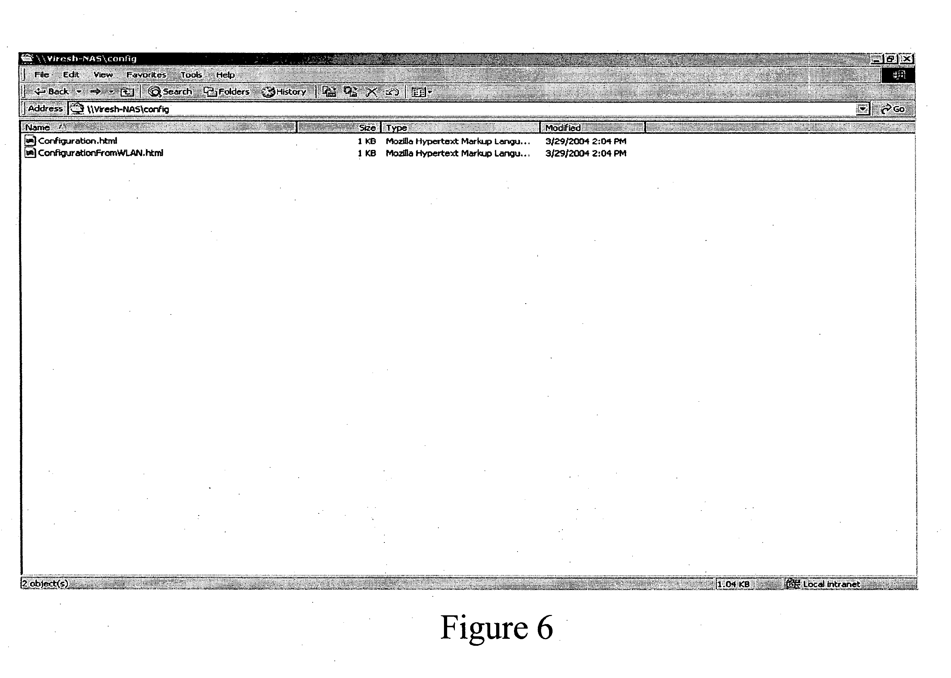

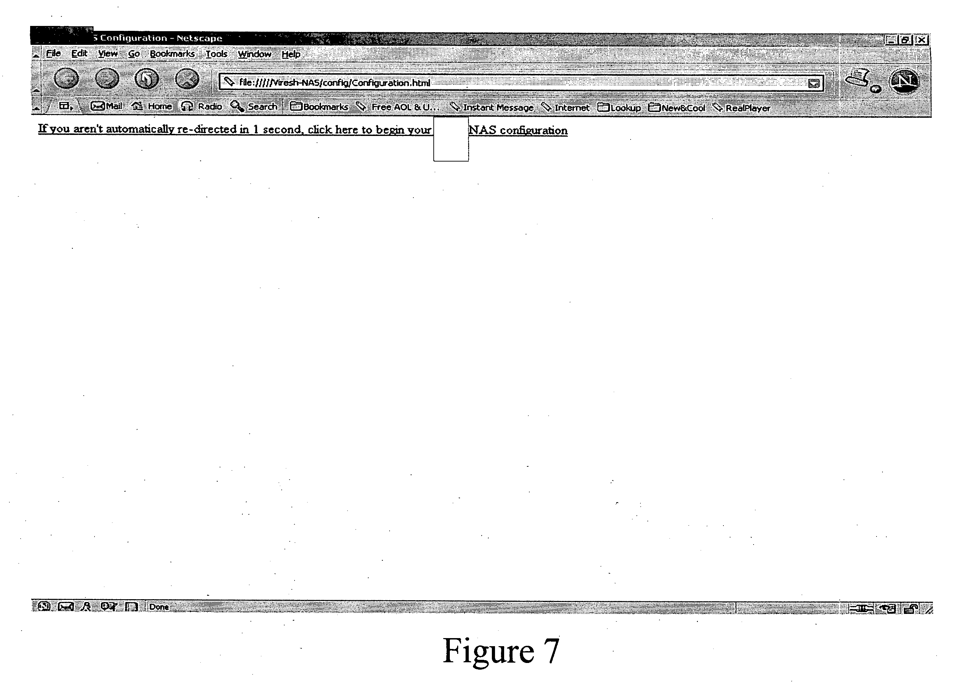

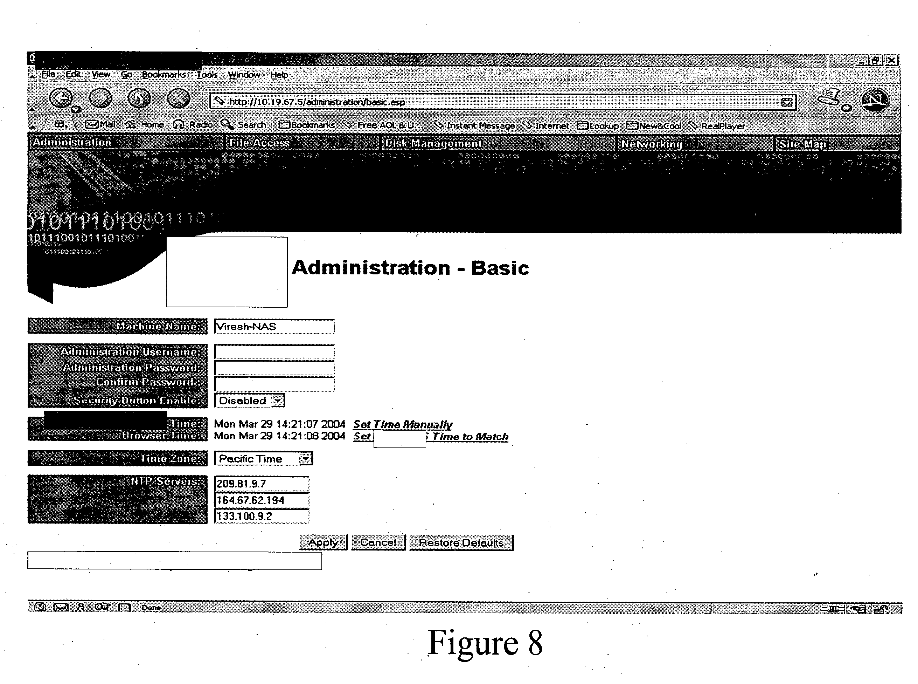

Figure 4 is an operational flow diagram of the process in which a security/authentication mechanism that facilitates storage access authentication may be enabled or disabled, in accordance with an embodiment of the invention. The process may be initiated in an exemplary NAS by way of executing the NAS' configuration file. At step 404, a user executes a file organizing application, such as the Microsoft Windows Explorer application, at his data processing device, in order to view one or more directories and their associated files. At step 408, the Workgroup directory (typically found in Windows Explorer) is accessed by the user, by "clicking" on this directory in the exemplary Windows Explorer user interface. In one embodiment; the Microsoft Windows operating system provides a mechanism that identifies and displays any data processing devices that employ such configuration files. Each of the data processing devices containing the configuration files is displayed to the user using Windows Explorer, for example. The data processing devices are identified by one or more default names configured within the data processing device's software or firmware. At step 412, the user locates and selects one of the NAS devices displayed by "clicking" on one of the appropriate default NAS name(s) displayed by the Workgroup directory in Windows Explorer, in order to access a NAS configuration file. Figure 5 illustrates a screen shot of Windows Explorer illustrating the directory contents of a NAS having an exemplary default name, Viresh-NAS; the screen shot is displayed after Viresh-NAS is selected from the Workgroup directory, in accordance with an embodiment of the invention. It is contemplated that a default name is preconfigured for each NAS at the time of manufacture. As illustrated in the embodiment of Figure 5, Viresh-NAS contains a directory tree comprising the following directories: Bulk, config, HighPerf, raid1, SafeData, and Printers. At step 416, the user locates the appropriate configuration file from the Viresh-NAS\config directory. Figure 6 illustrates a Windows Explorer screen shot of one or more configuration files residing within a configuration directory, in accordance with an embodiment of the invention. As illustrated, the configuration directory comprises a Viresh-NAS\config directory, that comprises two files - Configuration.html and ConfigurationFromWLAN.html. In this embodiment, the Configuration.html is associated with a local area network user interface setup while ConfigurationFromWLAN.html is associated with a wireless network user interface setup. At step 420, the appropriate configuration file is executed by "clicking" on the file. Execution of the configuration file allows an http server, provided by the NAS, to serve a browser residing in a client workstation (or data processing device). The browser may comprise Netscape Navigator, Internet Explorer or any other web browser. The browser notifies the user that the configuration file is processing the command as illustrated in Figure 7. Figure 7 illustrates a browser (e.g., Netscape) screen shot indicating that the configuration file is processing the command, in accordance with an embodiment of the invention. Thereafter, the configuration file generates a user interface (after the pages are served by the http server (e.g., NAS)) that allows the user to input various administrative parameters. Figure 8 illustrates a browser screen shot of an exemplary user interface that allows a user to configure or input one or more administrative parameters, in accordance with an embodiment of the invention. The user may configure or input one or more administrative parameters that enable or disable one or more security/authentication mechanisms. At step 424 in Figure 4, the user either enables or disables the security/authentication mechanism by making a selection. For example, the user may make one of two selections (enable or disable) from a "pull-down" field provided by the user interface.

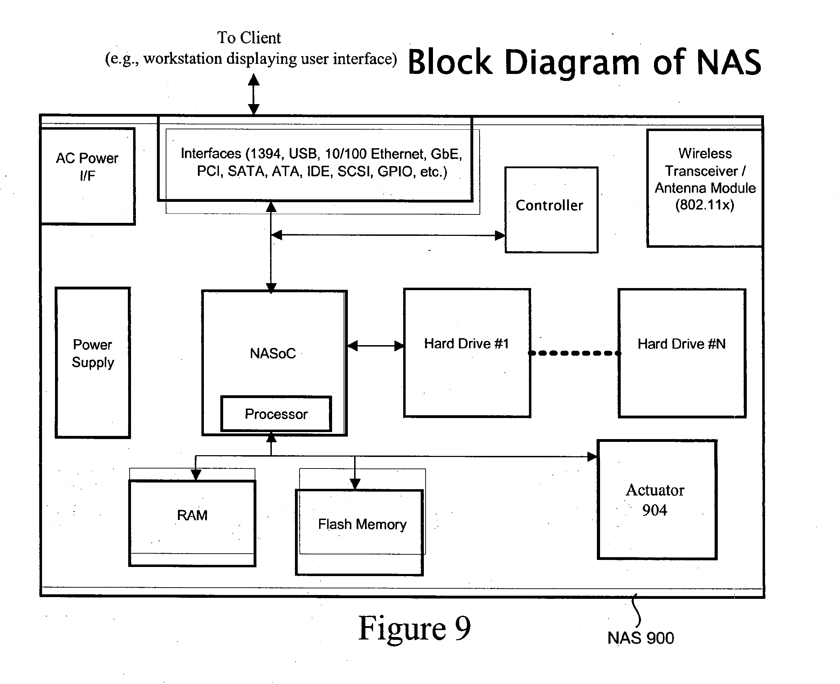

Figure 9 illustrates a block diagram of a NAS 900 incorporating an actuator 904 in accordance with an embodiment of the invention. Figure 9 illustrates a number of possible interconnections of the one or more devices present within the NAS 900. The actuator 904 comprises a device or authentication mechanism that facilitates performing one or more security/authentication functions. In a representative embodiment, the one or more security/authentication functions comprises receiving a physical input from a user of the NAS 900. For example, the actuator 904 may comprise a depressible push-button switch mounted on the NAS 900. The actuator 904 may be connected or incorporated onto the NAS printed circuit board (PCB) previously discussed in relation to Figure 2. In a representative embodiment, the actuator 904 comprises a switch that is used for enabling access to data stored in one or more data pools resident in the NAS. When depressed, the switch allows a user to authenticate himself, by way of inputting one or more parameters within a period of time. The one or more parameters may comprise a username and one or more passwords. The switch, for example, may be activated either mechanically or electrically. An administrative user may program the period of time into the NAS.

As previously discussed, execution of the software or firmware that is resident in the flash memory may facilitate the display of a user interface for managing and/or configuring the NAS 900. In a representative embodiment, the software or firmware comprises one or more configuration files that provide a user interface used for configuring the security/authentication mechanism. The user interface may allow the user to enable or disable the actuator 904 and its authentication mechanism.

Various aspects of the present invention may permit access to data stored in the NAS 900 in the event one or more authentication inputs are provided within a period of time after the actuator 904 is actuated. The access to data may comprise reading, modifying, or writing data in the data storage device. The actuator 904 may be activated for a period of time when the switch is depressed. The period of time may be programmed or set by an administrator, for example. In a representative embodiment, a user must initiate access to data stored in the NAS 900 before the actuator 904 reverts back to its inactive state, in order to maintain access to data stored in the NAS 900. For example, as long as a user accessed data (using his computing device) within the period of time after the switch has been depressed, the user will be successfully authenticated. Thereafter, for example, the user may continue to gain access to the data stored in the NAS 900 until he terminates his session. The user may terminate his session by logging off from the NAS 900. Alternatively, the user's session may be terminated when a certain period of time has elapsed, as pre-determined by an administrator. The administrator, for example, may set a duration of time, after successful authentication has occurred, in which a user may access one or more shares or one or more data pools in the NAS 900.

In a representative embodiment, a user may need to input a username and one or more passwords within a period of time after the actuator 904 is actuated or activated, before access to data stored in a data pool may occur. As a consequence, the user may need to input the username and one or more passwords within a period of time after the actuator 904 is actuated, for example. The data that is accessed may comprise data stored in one or more data pools, for example. The data may be located in one or more shares (or shared directories) of a data pool, for example.

Although the actuator 904 shown is presented as part of the NAS 900, aspects of the present invention provide for an actuator positioned external to the NAS 900 that communicates to the NAS 900 by way of one or more types of telecommunications. For example, an externally based actuator may communicate to the NAS 900 by way of wireless and/or wireline communications. The communication may occur using one or more authentication and encryption mechanisms.

Various aspects of the authentication mechanism provided in the present invention may be used in combination with one or more data access method and/or system embodiments referenced in United States Application Serial No. 11/049772, entitled "SYSTEM AND METHOD TO CONTROL ACCESS TO DATA STORED IN A DATA STORAGE DEVICE", (Attorney Docket No. 15682US02) filed February 3, 2005, the complete subject matter of which is incorporated herein by reference in its entirety. For example, access to data stored in the NAS 900 may occur if the authentication mechanism (i.e., the actuator 904 of Figure 9) of the present invention is utilized prior to employing selectively enabling access to data stored in the NAS 900, by way of the type of NAS interface.

Various aspects of the present invention may allow an actuator (such as the actuator 904 of Figure 9) to be used for verifying or authenticating a device that is newly introduced into the network. When a new device is added to the network, the actuator may be depressed to initiate a verification or authentication of the newly connected device. If the newly connected device is successfully authenticated, then, the newly connected device may be permitted access to data stored in a NAS, for example.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

## Claims

1. A method of accessing data stored in a data storage device comprising receiving an input provided by a user, said input used by an actuator that is operated by said user, said input facilitating said access to said data stored in said data storage device by said user.

2. The method of Claim 1 wherein said actuator comprises a switch.

3. The method of Claim 2 wherein said input short-circuits said switch.

4. The method of Claim 3 wherein operating said switch allows said access to said data for a period of time.

5. A method of authenticating a user of a data storage device comprising:
first receiving an input provided by said user that activates an actuation device;
second receiving a user identifier from said user; and
third receiving a password from said user.

6. The method of Claim 5 wherein said second receiving and said third receiving occurs within a period of time after said first receiving occurs.

7. The method of Claim 5 wherein said third receiving occurs within a period of time after said first receiving and/or said second receiving occurs.

8. A system for providing authorized access to data stored in one or more data pools of one or more data storage drives of a data storage device comprising:
a processor;
an actuation device used to receive an input provided by a user seeking said access to said data;
a memory in said data storage device;
one or more executable files stored in said memory of said data storage device;
a computing device communicatively coupled to said data storage device; and
an application resident in said computing device, said application capable of viewing said one or more files, said computing device used to identify and initiate execution of said one or more executable files using said application, said execution generating a user interface in which said actuation device may be enabled or disabled by said user.

9. The system of Claim 8 wherein said input actuates said actuation device for a period of time, allowing said access to said data by said user.

10. The system of Claim 8 wherein access to said data occurs if a user correctly inputs a username and a password after said actuation device is activated.
